# EUROPEAN PATENT APPLICATION

(11) **EP 4 603 519 A1**
(43) Date of publication of application: **20.08.2025**
(21) Application number: 23877698.3
(22) Date of filing: 12.10.2023
(51) Int. Cl.: C08F 220/28, C08F 220/18, C08F 220/44, C08F 220/06, C08F 218/08, C08F 212/08, H01M 50/42, H01M 50/446

(54) **COPOLYMER FOR SEPARATOR AND SECONDARY BATTERY COMPRISING SAME**

(30) Priority: 12.10.2022 KR 20220130798
(71) Applicant: Hansol Chemical Co., Ltd, Seoul 06169 (KR)
(72) Inventor: LEE, Nam-Joo, Wanju-gun, Jeollabuk-do 55321 (KR); JANG, Bo-Ok, Wanju-gun, Jeollabuk-do 55321 (KR); LEE, Go-Eun, Wanju-gun, Jeollabuk-do 55321 (KR); CHO, Seung-Wan, Wanju-gun, Jeollabuk-do 55321 (KR); KIM, Young-Su, Wanju-gun, Jeollabuk-do 55321 (KR); KIM, Jin-Yeong, Wanju-gun, Jeollabuk-do 55321 (KR); NOH, Myeong-Jun, Wanju-gun, Jeollabuk-do 55321 (KR); OH, Sae-Wook, Wanju-gun, Jeollabuk-do 55321 (KR); KWON, Se-Man, Wanju-gun, Jeollabuk-do 55321 (KR)
(74) Representative: Ipsilon Lyon
(86) International application number: PCT/KR2023/015708
(87) International publication number: WO 2024/080775

(57) **Abstract**

The present invention relates to: a copolymer a monomer unit comprising a heterocyclic structure of 2 to 6 carbon atoms containing at least one oxygen atom in an amount of 1% to 40% by weight, based on 100% by weight of the total weight of the copolymer; and core-shell particles, a slurry composition, a separator, and a secondary battery comprising same.

## Description

### Technical Field

The present disclosure relates to a copolymer, a core-shell particle containing the same copolymer, and a slurry composition, a separator, and a secondary battery.

### Background Art

Lithium secondary batteries have a high energy density. Thus, lithium secondary batteries are widely used in the electrical, electronic, communication, and computer industries. The application areas of lithium secondary batteries have expanded from small-sized lithium secondary batteries for portable electronic devices to high-capacity secondary batteries for hybrid vehicles and electric vehicles.

Lithium-ion secondary batteries are insulated by a separator. However, a short circuit between the positive and negative electrodes due to internal or external issues such as battery-cell abnormalities or shocks may occur. Thus, there is a possibility of heat generation and explosion for lithium-ion secondary batteries. Accordingly, securing thermal/chemical safety of a separator is significantly important.

Currently, polyolefin-based films are widely used as separators. However, polyolefin has the disadvantage of severe thermal shrinkage at high temperatures and weak mechanical properties.

To improve stability of these polyolefin-based separators, a porous separator has been developed in which a polyolefin porous substrate film is coated with a mixture of an inorganic particle and a binder.

That is, to suppress the thermal shrinkage of polyolefin-based separators caused by high temperature and suppress the instability of batteries caused by dendrites, one or both sides of a porous separator substrate are coated with an inorganic particle and a binder. Thereby, the inorganic particles can serve to reduce a shrinkage rate of the substrate, and at the same time, a safer separator can be manufactured through a coated layer.

Meanwhile, an electrode adhesive layer on a separator reduces a dead space between each electrode, accelerates the transfer of lithium ions, and serves as a movement pathway.

To demonstrate these electrode adhesive properties, widely used coating methods are a coating method for a single-coated separator (SCS) which involves single-coating a separator by dispersing resin in inorganic materials, and a coating method for a double-coated separator (DCS) which involves coating a ceramic-coated separator with resin.

To reduce the volumes of a coated separator and an attached electrode and protect the electrode, a lamination method through heat and pressure is used.

When many layers are laminated to manufacture a battery with high energy density, pressure is transmitted inside the battery, but heat is not transmitted properly. Because of that, the adhesion strength of the coated separator may decrease, and as a result, dead space may occur.

To overcome this, the development of a pressure sensitive binder (PSB) is required.

In addition, to ensure excellent battery properties, a coated layer is required to be uniformly coated and, at the same time, to have a strong adhesion strength to adhere to a substrate.

In particular, electrodes and separators are stacked at high density (staking) in high-capacity secondary batteries. When charging/discharging secondary batteries with high output, larger and more dead spaces are created inside each of the secondary batteries.

The dead spaces created in this way are a cause for an increase in the internal resistance of secondary batteries and a decrease in their lifespan. Meanwhile, when a resin with electrode adhesive properties is applied on a separator, performance degradation of a secondary battery caused by dead space can be greatly reduced.

### [Related Art Documents]

### [Patent Documents]

(Patent Document 1) Korean Patent No. 10-1430975
(Patent Document 2) Korean Patent Application Publication No. 10-2006-0072065

### Disclosure

### Technical Problem

Accordingly, the present disclosure seeks to provide a slurry composition with excellent inorganic adhesion strength and electrode adhesion strength to a porous substrate by using a copolymer.

In particular, the present disclosure provides a copolymer with excellent pressure sensitive adhesive properties at room temperature and under heating conditions (40°C to 70°C).

In addition, the present disclosure seeks to provide a separator, which has excellent adhesion strength, air permeability, and heat resistance by applying the slurry composition, and a battery with excellent performance and to which the separator is applied.

However, the problems that the present disclosure seeks to solve are not limited to the problems mentioned above, and other problems not mentioned will be clearly understood by those skilled in the art from the description below.

### Technical Solution

One aspect of the present disclosure provides a copolymer,

including a monomer unit containing a heterocyclic structure with 2 to 6 carbon atoms and at least one oxygen atom, wherein the monomer unit is present in an amount of 1% to 40% by weight, based on 100% by weight of the total weight of the copolymer.

Another aspect of the present disclosure provides a core-shell particle, including:
a core; and
a shell surrounding the core,
wherein the shell contains the copolymer.

A further aspect of the present disclosure provides a slurry composition, including:
the copolymer; and
an inorganic particle.

A yet further aspect of the present disclosure provides a separator, containing:
the slurry composition.

A still yet further aspect of the present disclosure provides a secondary battery, including:
the separator.

### Advantageous Effects

The copolymer of the present disclosure can enhance inorganic material adhesion strength and electrode adhesion strength to a separator substrate and increase heat resistance and air permeability of the separator.

In particular, the copolymer of the present disclosure is sensitive to pressure, thereby the copolymer can improve pressure-sensitive adhesive properties at room temperature and under heating conditions (40°C to 70°C).

In addition, the copolymer of the present disclosure can reduce a defect rate and minimize dead space formation, which occurs during lamination fixation during battery assembly, and can improve ionic conductivity and air permeability in an electrolyte solution.

On the other hand, when an inorganic coating binder is coated (DCS) with the copolymer of the present disclosure, or when coated alone (SCS) for multi-purpose use, adhesion strength can be maximized, and battery performance and stability can be enhanced while battery defects are ultimately minimized.

### Best Mode

Hereinafter, the operation and effects of the invention will be described in more detail through specific embodiments of the disclosure. However, these embodiments are merely presented as examples of the present disclosure, and the scope of rights of the present disclosure is not determined by the embodiments.

Prior to this, terms and words used in this specification and claims should not be construed as limited to their ordinary or dictionary meanings. Based on the principle that the inventor(s) can appropriately define the concept of the term to explain his or her invention in the best way, the terms and words are required to be interpreted as meaning and concept consistent with the technical idea of the present disclosure.

Therefore, the configuration of the embodiments described in this specification is only one of the most preferred embodiments of the present disclosure and does not represent the entire technical idea of the present disclosure. It should be understood that at the time of filing this application, there may be various equivalents and modifications that can replace the embodiments.

In this specification, singular expressions include plural expressions, unless the context clearly indicates otherwise. In this specification, terms such as "include", "comprise", or "have" are intended to indicate the presence of implemented features, numbers, steps, components, or combinations thereof. The terms should be understood as not precluding the presence or addition of one or more other features, numbers, steps, components, or combinations thereof.

In this specification, "to" and "~" in "a to b" and "a to b" indicating numerical ranges are defined as ≥ a and ≤ b.

A copolymer in one aspect of the present disclosure may include a monomer unit containing a heterocyclic structure with 2 to 6 carbon atoms and at least one oxygen atom, wherein the monomer unit is present in an amount of 1% to 40% by weight, based on 100% by weight of the total weight of the copolymer.

The monomer unit containing a heterocyclic structure with 2 to 6 carbon atoms and at least one oxygen atom can enhance the adhesion strength of the copolymer and thereby improve the performance of a separator to which the copolymer of the present disclosure is applied.

In other words, the cyclic ether structure may increase electron density of the copolymer, increasing the van der Waals force. In addition, the cyclic ether structure may have hydrogen bonds formed with hydrophilic functional groups, thereby inducing physical and chemical interactions with an electrode. Through this, adhesion strength may be improved. Because of this, the copolymer may exhibit pressure-sensitive dry adhesive properties even though it has a relatively high glass transition temperature (e.g., 4°C).

Typically, pressure-sensitive dry adhesive properties appear in polymers with a glass transition temperature of -10°C or lower.

In addition, a monomer unit containing a heterocyclic structure with 2 to 6 carbon atoms and at least one oxygen atom may exert adhesion strength, being sensitive to pressure under room temperature and heating conditions (40°C to 70°C) even when the glass transition temperature of the copolymer is not 0°C or less.

Meanwhile, the monomer unit containing a heterocyclic structure with 2 to 6 carbon atoms and at least one oxygen atom may have single bonds and ring structures, so it may have amphiphilic properties, which may increase its affinity for lithium ions.

In addition, the monomer unit containing a heterocyclic structure with 2 to 6 carbon atoms and at least one oxygen atom may have a cyclic ether structure. Due to that, the stiffness of the copolymer increases, increasing the glass transition temperature of the copolymer.

When the monomer unit containing a heterocyclic structure with 2 to 6 carbon atoms and at least one oxygen atom has a content below the content range herein, the air permeability of a separator may increase, or the adhesion strength may decrease.

When the monomer unit containing a heterocyclic structure with 2 to 6 carbon atoms and at least one oxygen atom has a content above the content range herein, polymerization reactivity may be reduced.

In one embodiment, the copolymer may further include an acrylonitrile-based monomer, an acrylate-based monomer unit, an acrylic acid-based monomer unit, a vinyl acetate-based monomer unit, and a styrene-based monomer unit.

The styrene-based monomer unit may contain a benzene structure and have little interaction with a carbonate functional group constituting an electrolyte solution. Thus, the styrene-based monomer unit may contribute to lowering an electrolyte solution swelling degree for the copolymer.

Meanwhile, based on 100% by weight of the total weight of the copolymer, 3% to 15% by weight of the acrylonitrile-based monomer, 20% to 60% by weight of the acrylate-based monomer unit, 5% to 15% by weight of the acrylic acid-based monomer unit, 5% to 15% by weight of the vinyl acetate-based monomer unit, and 10% to 20% by weight of the styrene-based monomer unit may be included.

When the acrylonitrile-based monomer unit has a content above or below the content range of the present disclosure, it may cause decreases in dispersibility of polymer particles and inorganic slurry, or cause a decrease in adhesion strength.

When the acrylate-based monomer unit has a content above or below the content range of the present disclosure, it may cause a decrease in adhesion strength and a decrease in polymerization reactivity.

When the acrylic acid-based monomer unit has a content above or below the content range of the present disclosure, it may cause polymer aggregation and precipitation or a decrease in adhesion strength.

When the vinyl acetate-based monomer unit has a content above or below the content range of the present disclosure, it may cause stability problems such as a storage stability issue.

When the styrene-based monomer unit has a content above or below the content range of the present disclosure, it may cause a decrease in adhesion strength.

In another embodiment, the acrylate-based monomer unit may be formed by polymerizing one or more types selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate.

In addition, the acrylic acid-based monomer unit, for example, may be formed by polymerizing one or more types selected from the group consisting of acrylic acid and methacrylic acid.

Meanwhile, the acrylonitrile-based monomer may be formed by polymerizing one or more types selected from the group consisting of acrylonitrile and methacrylonitrile.

In addition, the vinyl acetate-based monomer unit may be formed by polymerizing a vinyl acetate monomer. The styrene-based monomer unit may be formed by polymerizing a styrene monomer.

In a further embodiment, the heterocyclic structure with 2 to 6 carbon atoms and at least one oxygen atom may include ethylene oxide, trimethylene oxide, furan, tetrahydrofuran, tetrahydropyran, pyran, dioxane, morpholine, or combinations thereof.

In a yet further embodiment, the monomer unit containing the heterocyclic structure with 2 to 6 carbon atoms and an oxygen atom may be formed by polymerizing tetrahydrofurfuryl acrylate, tetrahydrofurfuryl methacrylate, or a combination thereof.

In a still yet further embodiment, the acrylic acid-based monomer unit may be combined with an alkali metal.

That is, a carboxylate group of the acrylic acid-based monomer unit may be combined with an alkali metal, a hydroxide containing an alkali metal, or a combination thereof.

Meanwhile, a weight ratio of the alkali metal and the copolymer (weight of the alkali metal: weight of the copolymer) may be 1 to 10:100.

When the weight ratio of the alkali metal and the copolymer is above or below the weight ratio of the present disclosure, the adhesive properties of a separator may deteriorate. In particular, the electrode adhesion strength of the separator may decrease.

The adhesion strength of the separator containing the alkali metal may be determined depending on strength of cohesion and repulsion between elements.

The copolymer of the present disclosure may experience a change in the inorganic adhesion strength or electrode adhesion strength due to changes in strength of cohesion, adhesion, and repulsion between elements depending on the content of the alkali metal.

When the alkali metal is used to prepare a copolymer for a binder, coating stability and overall adhesion strength are improved due to the increased strength of cohesion between elements and increased dispersibility within a slurry. However, when an excessive amount of alkali metal is added, the viscosity may increase, and overall adhesion may decrease.

Meanwhile, enhancement in the adhesion strength to inorganic materials means increased adhesion strength to inorganic materials and substrates. In other words, an increase in the amount of minerals may enhance the heat resistance properties of a separator.

The electrode adhesion strength of the separator may reduce a rate for a defect that occurs when loading electrodes during battery assembly, and at the same time, may minimize dead space formation, and improve ionic conductivity in an electrolyte solution.

In addition, when a binder layer is laminated alone onto an inorganic-coated layer through coating, electrode adhesion strength may be maximized. Ultimately, the electrode adhesion strength may minimize a battery defect rate and further improve battery performance.

In a still yet further embodiment, the copolymer may include a repeated monomer unit represented by Formula 1 below.

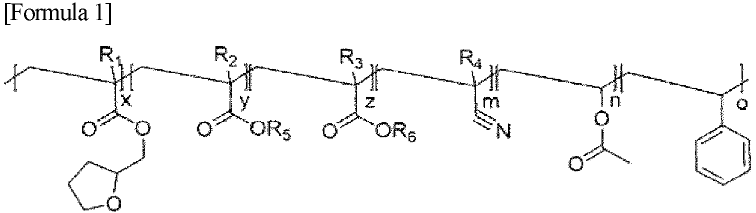

In Formula 1 above,
R₁ to R₄ may each independently be hydrogen; linear or branched hydrocarbons having 1 to 4 carbon atoms; or a combination thereof. R₅ may be a linear or branched hydrocarbon having 1 to 20 carbon atoms. R₆ may be hydrogen, an alkali metal, or a combination thereof. x, y, z, m, n, and o may satisfy an equation of x+y+z+m+n+o=1.
x, y, z, m, n, and o in Formula 1 correspond to a weight fraction of each monomer unit. The sum of the weight fractions of each monomer unit is 1.

In another embodiment, R₁ to R₄ in Formula 1 may each independently include one or more selected from the group consisting of hydrogen, methyl, and ethyl.

In addition, R₅ in Formula 1 may include one or more selected from the group consisting of methyl, ethyl, n-propyl, iso-propyl, n-butyl, tert-butyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, iso-pentyl, iso-heptyl, iso-octyl, iso-nonyl, iso-decyl, iso-undecyl, iso-dodecyl, isotridecyl, iso-tetradecyl, iso-pentadecyl, iso-cetyl, iso-hexadecyl, iso-heptadecyl, iso-stearyl, iso-octadecyl, iso-nonadecyl, iso-icosyl, iso-henicosyl, and iso-docosil.

Meanwhile, enhancement in the adhesion strength to inorganic materials means increased adhesion strength to inorganic materials and substrates. This may mean that the heat resistance properties of a separator may be enhanced by increasing the amount of minerals.

The electrode adhesion strength of the separator may reduce a rate for a defect that occurs when loading electrodes during battery assembly, and at the same time, may minimize dead space formation and improve ionic conductivity in an electrolyte solution.

In addition, when a binder layer is laminated alone onto the inorganic-coated layer by coating, electrode adhesion strength may be maximized. Ultimately, the electrode adhesion strength may minimize a battery defect rate and further improve battery performance.

In a further embodiment, the copolymer may be a random or block copolymer depending on a synthesis process.

In a yet further embodiment, the copolymer may be crosslinked by a crosslinking monomer, and the degree of crosslinking of the copolymer may be 80% or more.

The crosslinking monomer for use may include one or more selected from the group consisting of divinylbenzene, aliphatic difunctional methacrylate, and aromatic difunctional methacrylate.

Additionally, the crosslinking monomer may be added in an amount of 0.01 to 5 parts by weight based on 100 parts by weight of the copolymer.

Meanwhile, the degree of crosslinking may be 99% or less.

In a still yet further embodiment, the number average molecular weight of the copolymer may be 10,000 to 1,000,000.

When the number average molecular weight of the copolymer is less than 10,000, the fluidity of the copolymer may increase, resulting in reduced dispersibility and deterioration of the heat resistance properties of a separator. When the number average molecular weight exceeds 1,000,000, the viscosity may be too high to be used, and the pores of a separator may be blocked, reducing air permeability and resistance.

Core-shell particles according to another aspect of the present disclosure each may include a core and a shell surrounding the core, and the shell may include the copolymer.

Preferably, the average particle diameter of the core may be 50 to 250 nm, and the average particle diameter of the final core-shell particles may be 300 to 1000 nm.

When the cores are not used, the particle shape may collapse due to absence of a hard and durable structure, and as film formation progresses, the pores of the separator may be blocked, thereby reducing air permeability and resistance.

This is because when durability is not provided through the cores, the pores of the separator may be blocked as film formation progresses, which may also cause problems in electrode adhesive layer coating.

In a still yet further embodiment, the core may be a polymer containing an acrylate-based monomer unit, an acrylic acid-based monomer unit, or a combination thereof, but is not limited thereto. Additionally, the core particle may be cross-linked.

For crosslinking of the core particle, the crosslinking monomer may include one or more selected from the group consisting of divinylbenzene, aliphatic difunctional methacrylate, and aromatic difunctional methacrylate.

Meanwhile, the degree of crosslinking of the core-shell particles may be 80% or more and 99% or less. The degree of crosslinking of the core-shell particles is measured in the same manner as the method of measuring the degree of crosslinking of the copolymer used for the shell, except that the core-shell particles are used instead of the copolymer used for the shell.

A slurry composition according to a further aspect of the present disclosure may include the copolymers and inorganic particles.

The inorganic particles may be used without limitation as long as they are insulating particles, and may preferably be insulating particles with high dielectric constant.

Specific examples of the inorganic particles may include any one selected from the group consisting of Al₂O₃, AlOOH, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃(PZT), (Pb,La)(Zr,Ti)O₃(PLZT), and a combination thereof.

There is no particular limitation on the size of the inorganic particles, but for example, the average particle diameter may be 0.01 µm to 30 µm, more preferably 0.1 µm to 10 µm. When the average particle diameter of the inorganic particles is below the desirable range, dispersibility may become low. When the average particle diameter of the inorganic particles exceeds the preferred range, the thickness of the coated layer may become large after coating, and the mechanical properties may deteriorate.

Additionally, the shape of the inorganic particles is not particularly limited, and may be, for example, spherical, plate-shaped, oval, or irregularly shaped.

A separator according to a yet further aspect of the present disclosure may include the slurry composition.

A separator may be manufactured by coating at least one side of a porous substrate film with the slurry composition, or by preparing the slurry composition in the form of a film and laminating it onto a porous substrate film.

Meanwhile, the separator may be used as a separator for secondary batteries, for example, as a separator for lithium secondary batteries.

For example, separator manufacturing may be performed by (a) preparing a polymer solution by dissolving or dispersing the copolymers in a solvent; (b) adding and mixing inorganic particles to the polymer solution of the step a); and (c) coating with the mixture of the step b) and drying at least one region selected from the group consisting of a surface of the polyolefin-based separator substrate and a portion of pores in a substrate.

First, 1) copolymers are made and prepared in the form of a polymer solution by being dissolved or dispersed in an appropriate solvent.

The solvent preferably has a solubility index similar to that of the copolymers used as binders and has a low boiling point. This is to facilitate uniform mixing and subsequent solvent removal. Non-limiting examples of the solvent applicable include dimethoxy ethane, ethyl acetate, acetone, tetrahydrofuran, methylene chloride, chloroform, dimethylformamide, N-methyl-2-pyrrolidone (NMP), cyclohexane, water, or mixtures thereof. The solvent may be more preferably used in a water-dispersed state.

2) An inorganic particle/polymer mixture is prepared by adding and dispersing inorganic particles to the prepared polymer solution.

It is preferable to perform a dispersion process of the polymer solution and inorganic particles. At this time, the appropriate dispersion time may be 10 minutes to 5 hours. Conventional methods may be used as the dispersion method, and the ball mill method is particularly preferable.

There are no major limitations on a composition of the mixture of the inorganic particles and polymers. However, the thickness, pore size, and porosity of a finally prepared organic/inorganic composite porous separator of the present disclosure may be adjusted depending on the composition.

In other words, as a ratio of inorganic particles (I) to polymers (P) (ratio = I/P) increases, the porosity of a separator increases. This results in an increase in the thickness of the separator at the same solid content (inorganic particle weight + polymer weight). In addition, possibility of pore formation between inorganic particle increases, increasing pore size. At this time, as the size (particle diameter) of the inorganic particles increases, an interstitial distance between the inorganic materials increases, so the pore size increases.

3) The prepared inorganic particle/polymer mixture is applied onto a prepared polyolefin-based separator substrate for coating and then dried. Thereby, a separator of the present disclosure may be obtained.

In this case, a coating method with the inorganic particle/polymer mixture onto a polyolefin-based separator substrate may be a conventional coating method known in the art. Various coating methods, such as dip coating, die coating, roll coating, comma coating, or a combination thereof may be used. In addition, when coating a polyolefin-based separator substrate with the inorganic particle/polymer mixture, a coating may be applied to both sides of the separator substrate or may be selectively applied to only one side thereof.

When the separator is used in a secondary battery, lithium ions may be transferred not only through the separator substrate but also through a porous active layer, as well as when an internal short circuit occurs due to an external impact, the safety improvement effect described above may be achieved.

Additionally, the secondary battery may include a positive electrode, a negative electrode, a separator interposed between the positive electrode and the negative electrode, and an electrolyte solution.

The secondary battery may be manufactured according to a common method known in the art. For example, a secondary battery is manufactured by assembling electrodes and a separator, and then injecting an electrolyte solution into the assembly.

There is no significant limitation on an electrode to be applied with the separator, but a positive electrode active material may be any common positive electrode active material applicable in the positive electrode of a secondary battery. Non-limiting examples of the positive electrode active material include lithium intercalation materials, such as lithiated magnesium oxide, lithiated cobalt oxide, lithiated nickel oxide, or composite oxides formed from their combinations. In addition, a negative electrode active material may be a common negative electrode active material applicable in a negative electrode of a conventional electrochemical device. Non-limiting examples of the negative electrode active material include lithium metal, lithium alloys, and lithium intercalation materials such as carbon, petroleum coke, activated carbon, graphite, or other carbon-based materials. The two electrodes on both sides are formed by binding the above-described two positive and negative electrode active materials to their corresponding current collectors which are a positive electrode current collector (i.e., a foil made of aluminum, nickel, or a combination thereof) and a negative electrode current collector (i.e., a foil made of copper, gold, nickel, or copper alloy, or a combination thereof), respectively.

The electrolyte is a salt with the same structure as A+B-. A+ includes alkali metal cations such as Li+, Na+, K+, or ions made of a combination thereof. B- includes anions such as PF₆-, BF₄-, Cl-, Br-, I-, ClO₄-, AsF₆-, CH₃CO₂-, CF₃SO₃-, N(CF₃SO₂)₂-, and C(CF₂SO₂)₃-, or ions made of a combination thereof. It is preferable that the A+B- salt is dissolved and dissociated in an organic solvent, such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (GBL), or mixtures thereof.

In addition to the general winding process, processes for applying the separator to a battery may include stacking and folding of the separator and electrodes.

### Mode for Disclosure

Hereinafter, the present disclosure will be described in more detail using examples, but the present disclosure is not limited thereto.

### [Preparation Example 1] Preparation of Copolymers

### Core Particle Preparation

0.1 to 3 parts by weight of a sulfate-based emulsifier based on 100 parts by weight of monomer mixture (A) and 400 parts by weight of distilled water were added to a reaction vessel and stirred. While high-purity nitrogen gas was injected into the reaction vessel, the temperature was raised to 83°C.

0.1 to 3 parts by weight of ammonium persulfate, a decomposition initiator, was added to the reaction vessel prepared at 83°C, based on 100 parts by weight of the monomer mixture (A). To the reaction vessel, 0.1 to 1 part by weight of crosslinking monomer was added based on 100 parts by weight of monomer mixture (A) to induce a continuous emulsion polymerization reaction. As a result, core particles were prepared.

The monomer mixture (A) used was a mixture of a crosslinking monomer, a monomer of acrylic acid (AA), and methyl methacrylate (MMA) at a weight ratio of 1:1:98.

### Core-shell Particle Preparation

0.1 to 3 parts by weight of a sulfate-based emulsifier, and 0.1 to 15 parts by weight of the prepared core particles, based on 100 parts by weight of monomer mixture (B) and 250 parts by weight of distilled water were added to a reaction vessel and stirred. While high-purity nitrogen gas was injected into the reaction vessel, the temperature was raised to 70°C. 0.1 to 3 parts by weight of ammonium persulfate, a decomposition initiator, was added to the reaction vessel prepared at 70°C, based on 100 parts by weight of the monomer mixture (B). To the reaction vessel, 0.05 part by weight of crosslinking monomer was added based on 100 parts by weight of monomer mixture (B) to induce a continuous emulsion polymerization reaction. Additionally, an aging process was performed at 75°C for 5 to 12 hours. As a result, core-shell particles were prepared.

Meanwhile, the crosslinking monomer might be added in an amount of 0.01 to 5 parts by weight based on 100 parts by weight of the monomer mixture (B).

Afterward, if necessary, a carboxylic acid moiety of the prepared copolymers was ionized by adding an aqueous solution of metal hydroxide (NaOH, LiOH, and KOH).

The monomer mixture (B) was adjusted to have appropriate amounts of tetrahydrofurfuryl methacrylate (THMFA), styrene (ST), acrylonitrile (AN), butyl acrylate (BA), acrylic acid (AA), and vinyl acetate (VAc).

The prepared core-shell particles were used as a binder.

### [Preparation Example 2] Preparation of Slurries for Porous Film Coating

Inorganic particles (alumina (average particle diameter: 0.5 µm) or boehmite (average particle diameter: 0.7 µm)) and core-shell particles (binders) prepared in Preparation Example 1 were mixed at a solid weight ratio of 80:20. Thereafter, additional distilled water was added thereto and mixed so that the solids concentration became 35% by weight. This mixture was sufficiently dispersed by a ball mill method or with a mechanical stirrer to prepare slurries.

### [Preparation Example 3] Preparation of Separators

The slurries for porous film coating prepared in Preparation Example 2 were applied to a polyolefin porous substrate (polyethylene (PE) and polypropylene (PP)) to form inorganic coating layers. Various coating methods might be used, such as dip coating, die coating, gravure coating, and comma coating.

In addition, after coating, drying was performed by methods such as warm air, hot air, vacuum drying, and infrared drying, and a drying temperature range was 50°C to 80°C.

The thickness of the inorganic coating layers was 1 to 6 µm on one side or both sides. When the thickness was less than 1 µm, the heat resistance of separators was significantly reduced, and when the thickness was more than 6 µm, the thickness of the separators was too large, which might reduce energy density of batteries and increase resistance.

### [Examples 1 to 3 and Comparative Examples 1 to 3]

Examples 1 to 3 and Comparative Examples 1 to 3 were prepared by adjusting the content of monomers as shown in Table 1 below in the preparation of core-shell particles of Preparation Example 1.

**[Table 1]**

| | Monomer weight (% by weight) | | | | | |
|---|---|---|---|---|---|---|
| | THFMA | ST | AN | BA | AA | VAc |
| Example 1 | 10 | 15 | 10 | 45 | 10 | 10 |
| Example 2 | 20 | 15 | 10 | 35 | 10 | 10 |
| Example 3 | 30 | 15 | 10 | 25 | 10 | 10 |
| Comparative Example 1 | 0 | 15 | 10 | 55 | 10 | 10 |
| Comparative Example 2 | 10 | 5 | 10 | 55 | 10 | 10 |
| Comparative Example 3 | 10 | 25 | 10 | 35 | 10 | 10 |

With regard to the monomers shown in Table 1, THMFA represents tetrahydrofurfuryl methacrylate, ST represents styrene, AN represents acrylonitrile, BA represents butyl acrylate, AA represents acrylic acid, and VAc represents vinyl acetate.

THMFA corresponds to a monomer containing a heterocyclic structure with 2 to 6 carbon atoms and at least one oxygen atom.

Meanwhile, the crosslinking degree measurement of the copolymers used for the shells of core-shell particles was performed by measuring a film weight by making films from the copolymers used in the shells and then impregnating the films with diethyl carbonate (DEC) at 60°C for 24 hours and drying it.

Afterward, crosslinking rates were calculated as [(Weight of copolymer film used in shell after impregnation and drying)/(Weight of copolymer film used in shell before impregnation and drying)]*100.

The crosslinking degrees of the copolymers used for the cells of the core-shell particles of Examples 1 to 3 were all measured to be 80% to 99%.

The crosslinking rates of the core-shell particles of Examples 1 to 3, measured in the same manner using the core-shell particles of Examples 1 to 3 instead of the copolymers used for the shells, were measured to be 80% to 99%.

### [Evaluation Example 1] Average Diameter, Conversion Rate, and Glass Transition Temperature of Core-shell Particles

Average particle diameters of the core-shell particles of Examples 1 to 3 and Comparative Examples 1 to 3 were analyzed using a Particle Size analyzer (product name: Z3000, manufacturer: Nicomp).

Conversion rates of the core-shell particles of Examples 1 to 3 and Comparative Examples 1 to 3 were obtained by drying 0.5 to 1 g of core-shell particles (binders) at 180°C for 15 minutes, and analyzing the results using the formula (Actual dry weight/Theoretical dry weight) X 100%.

Glass transition temperature was analyzed by placing 10 to 20 mg of the core-shell particles (binders) of Examples 1 to 3 and Comparative Examples 1 to 3 in a 40 µl aluminum pan, and then confirming the thermal behaviors of the core-shell particles (binders) using a differential scanning calorimeter (DSC).

### [Evaluation Example 2] Electrolyte solution Swelling Degrees of Core-shell particles

The core-shell particles (binders) of Examples 1 to 3 and Comparative Examples 1 to 3 were dried in a 16 π circular mold at 60°C for 24 hours. The prepared specimens were immersed in electrolyte solution (EC: DEC = 3:7 + VC 1%, 1.6M LiPF 6) and left at 60°C for 24 hours. Thereafter, weight change rates of the changed specimens were measured.

### [Evaluation Example 3] Dry Electrode Adhesion Strength of Separator

The separators prepared according to Preparation Example 3 using the core-shell particles (binders) of Examples 1 to 3 and Comparative Examples 1 to 3 were cut to 20 mm in width and 70 mm in length.

After placing electrodes cut to 25 mm in width and 70 mm in length on the prepared separators, a temperature of 65°C and a pressure of 500 kg were applied for 10 seconds using a hot press. As a result, specimens were prepared.

The prepared specimens were mounted on a UTM (1 kgf load cell), one part of the separators was fixed to an upper clip of a tensile strength machine, and the tape attached to one side of the separators was fixed to a lower clip. Then, the 180° peel strength was measured at a speed of 100 mm/min. Five or more specimens per sample were prepared and measured, and the average values were calculated.

### [Evaluation Example 4] Wet Electrode Adhesion Strength of Separators

The separators prepared according to Preparation Example 3 using the core-shell particles (binders) of Examples 1 to 3 and Comparative Examples 1 to 3 were cut to 20 mm in width and 70 mm in length.

After placing electrodes cut to 25 mm in width and 70 mm in length on the prepared separators, a temperature of 65°C and a pressure of 500 kg were applied for 10 seconds using a hot press. Afterward, the resulting products were enclosed in an aluminum pouch and impregnated in an electrolyte solution for 12 hours at room temperature.

The prepared specimens were mounted on a UTM (1 kgf load cell), one part of the separators was fixed to an upper clip of a tensile strength machine, and the tape attached to one side of the separators was fixed to a lower clip. Then, the 180° peel strength was measured at a speed of 100 mm/min. Five or more specimens per sample were prepared and measured, and the average values were calculated.

### [Evaluation Example 5] Electrode Adhesion Strength of Separator at Room Temperature and Heating (40°C to 70°C)

The separators prepared according to Preparation Example 3 using the core-shell particles (binders) of Examples 1 to 3 and Comparative Example 1 were cut to 20 mm in width and 70 mm in length.

After placing electrodes cut to 25 mm in width and 70 mm in length on the prepared separators, respective temperatures of 40°C, 50°C, 60°C, 70°C, 80°C and respective pressures of 300 kg, 400 kg, 500 kg were applied for 10 seconds using a hot press. As a result, specimens were prepared.

The prepared specimens were mounted on a UTM (1 kgf load cell), one part of the separators was fixed to an upper clip of a tensile strength machine, and the tape attached to one side of the separators was fixed to a lower clip. Then, the 180° peel strength was measured at a speed of 100 mm/min. Five or more specimens per sample were prepared and measured, and the average values were calculated.

### [Evaluation Example 6] Change in Air Permeability of Separators

The time (in seconds) required for 100 cc of air to pass through with the use of the separators prepared according to Preparation Example 3 using the core-shell particles (binders) of Examples 1 to 3 and Comparative Examples 1 to 3 was measured using a gas permeability tester.

Meanwhile, a change in air permeability represents a value obtained by subtracting a value for air permeability of an uncoated polyolefin separator from a value for air permeability of the separators prepared according to Preparation Example 3 using the core-shell particles (binders) of Examples 1 to 3 and Comparative Examples 1 to 3.

The average diameter, glass transition temperature, and electrolyte solution swelling degree of the core-shell particles (binders) of Examples 1 to 3 and Comparative Examples 1 to 3 evaluated by Evaluation Example 1 and Evaluation Example 2 are shown in Table 2 below.

**[Table 2]**

| Core-shell particles | Particle size (nm) | Conversion rate (%) | Glass transition temperature (°C) | Electrolyte solution swelling degree (%) |
|---|---|---|---|---|
| Example 1 | 500 | 90 | 4 | 700 |
| Example 2 | 450 | 91 | 16 | 900 |
| Example 3 | 380 | 90 | 36 | 750 |
| Comparative Example 1 | 400 | 92 | 34 | 1000 |
| Comparative Example 2 | 530 | 90 | 30 | 700 |
| Comparative Example 3 | 440 | 91 | 38 | 500 |

As shown in Table 2 above, the average diameters of the core-shell particles of Examples 1 to 3 were 280 to 500 nm. The conversion rates of the core-shell particles of Examples 1 to 3 were 90% to 91%. The glass transition temperature of the core-shell particles of Examples 1 to 3 was in the range of 3°C to 40°C.

In addition, as the content of THMFA increased and the content of BA decreased, the average diameters of the core-shell particles decreased and the glass transition temperature tended to increase.

On the other hand, it was confirmed that the electrolyte solution swelling degrees of the core-shell particles of Examples 1 to 3 prepared using THMFA were lower than those of the core-shell particles of Comparative Example 1 prepared without using THMFA.

In addition, it was confirmed that the electrolyte solution swelling degrees tended to decrease as the ST content increased.

The electrolyte solution swelling degrees of the core-shell particles of Examples 1 to 3 were in the range of 600% to 900%.

Dry electrode adhesion strength and wet electrode adhesion strength of the separators prepared according to Preparation Example 3 using the core-shell particles (binders) of Examples 1 to 3 and Comparative Examples 1 to 3 evaluated by Evaluation Example 3 and Evaluation Example 4 are shown in Table 3 below.

**[Table 3]**

| Core-shell particles | Dry electrode adhesion strength (gf/mm) | Wet electrode adhesion strength (gf/mm) |
|---|---|---|
| Example 1 | 1.80 | 0.27 |
| Example 2 | 3.33 | 0.65 |
| Example 3 | 3.30 | 1.25 |
| Comparative Example 1 | 0.4 | 0 |
| Comparative Example 2 | 0.64 | 0 |
| Comparative Example 3 | 1.43 | 0 |

As shown in Table 3 above, it was confirmed that separators, to which the core-shell particles of Examples 1 to 3 prepared using THMFA were applied, showed high dry and wet electrode adhesion strength compared to the separators to which the core-shell particles of Comparative Example 1 prepared without using THMFA were applied or to which the core-shell particles of Comparative Examples 2 and 3 where the ST content was adjusted were applied.

In particular, in the case of the separators to which the core-shell particles of Comparative Examples 1 to 3 were applied, it was confirmed that wet electrode adhesion strength was almost lost.

Room temperature and heated electrode adhesion strength of the separators prepared according to Preparation Example 3 using the core-shell particles (binders) of Examples 1 to 3 and Comparative Examples 1 to 3 evaluated by Evaluation Example 5 are shown in Table 3 below.

**[Table 4]**

| Core-shell particles | | Adhesion strength (gf/mm) | | | | | |
|---|---|---|---|---|---|---|---|
| Example 1 | Temperature Pressure | Room temperature (25°C) | 40°C | 50°C | 60°C | 70°C | 80°C |
| | 300kgf/cm | 0.08 | 0.29 | 0.75 | 0.88 | 1.61 | 1.38 |
| | 400kgf/cm | 0.2 | 0.52 | 1.02 | 1.27 | 1.80 | 2.33 |
| | 500kgf/cm | 0.33 | 0.58 | 1.18 | 1.92 | 2.47 | 2.64 |
| Example 2 | Temperature Pressure | Room temperature (25°C) | 40°C | 50°C | 60°C | 70°C | 80°C |
| | 300kgf/cm | 0 | 0.35 | 0.57 | 0.89 | 1.58 | 1.69 |
| | 400kgf/cm | 0 | 0.40 | 1.12 | 1.25 | 2.23 | 1.80 |
| | 500kgf/cm | 0 | 0.49 | 1.68 | 2.58 | 2.70 | 2.91 |
| Example 3 | Temperature Pressure | Room temperature (25°C) | 40°C | 50°C | 60°C | 70°C | 80°C |
| | 300kgf/cm | 0 | 0 | 0.71 | 0.88 | 1.52 | 1.70 |
| | 400kgf/cm | 0 | 0 | 1.00 | 1.11 | 2.31 | 2.46 |
| | 500kgf/cm | 0 | 0 | 1.58 | 2.51 | 2.79 | 2.95 |
| Comparative Example 1 | Temperature Pressure | Room temperature (25°C) | 40°C | 50°C | 60°C | 70°C | 80°C |
| | 300kgf/cm | 0 | 0 | 0.13 | 0.20 | 0.46 | 0.33 |
| | 400kgf/cm | 0 | 0 | 0.19 | 0.25 | 0.58 | 0.80 |
| | 500kgf/cm | 0 | 0 | 0.22 | 0.40 | 0.8 | 1.03 |

As shown in Table 4 above, it was confirmed that separators, to which the core-shell particles of Examples 1 to 3 prepared using THMFA were applied, showed high electrode adhesion strength under the same temperature and pressure conditions compared to the separator to which the core-shell particles of Comparative Example 1 prepared without using THMFA were applied.

In particular, the core-shell particles of Example 1 showed room temperature pressure-sensitive adhesive properties even though the glass transition temperature was 4°C.

Meanwhile, it was confirmed that, as the content of THMFA increased, the glass transition temperature increased, and the vacuum pressure properties at room temperature disappeared, but the vacuum pressure properties appeared, and the adhesion strength improved when heated.

Amounts of change in air permeability of the separators prepared according to Preparation Example 3 using the core-shell particles (binders) of Examples 1 to 3 and Comparative Examples 1 to 3 evaluated by Evaluation Example 6 are shown in Table 5 below.

**[Table 5]**

| Core-shell particles | Air permeability (sec/100cc) |
|---|---|
| Example 1 | Δ73 |
| Example 2 | Δ46 |
| Example 3 | Δ22 |
| Comparative Example 1 | Δ13 |
| Comparative Example 2 | Δ33 |
| Comparative Example 3 | Δ31 |

As shown in Table 5 above, it was confirmed that separators, to which the core-shell particles of Examples 1 to 3 prepared using THMFA were applied, showed significant amounts of change in air permeability compared to the case for the core-shell particles of Comparative Example 1 prepared without using THMFA.

In addition, it was confirmed that the lower the THFMA content, the greater the amounts of change in air permeability.

In other words, it was confirmed that as the content of THFMA increased, the glass transition temperature increased and the amount of change in air permeability decreased.

This means that the lower the glass transition temperature, the more difficult it was to maintain a particle shape at room temperature, and when coating on a separator was performed through heat application, the particles were easily melted due to the heat and were in the form of a film, easily blocking the pores of the separator.

On the other hand, when the glass transition temperature was high, even when heat was applied, the pores of the separator were not blocked since the particle shape was maintained, so the change in air permeability might be small.

In other words, it was confirmed that a separator with excellent adhesion strength and air permeability could be manufactured using a copolymer for a binder containing THMFA in the content range described herein.

In particular, the copolymer for a binder of the present disclosure was able to have pressure sensitive adhesive properties.

In addition, it was confirmed that performance and stability of secondary batteries might be improved by using a separator with excellent heat resistance and adhesive properties through the application of the copolymer for a binder containing THMFA in the content range of the present disclosure.

The scope of the present disclosure is indicated by the claims described later rather than the detailed description above. The meaning and scope of the patent claims, and all changes or modified forms derived from the equivalent concept thereof, should be construed as being included in the scope of the present disclosure.

### Industrial Applicability

A copolymer of the present disclosure can enhance adhesion strength of inorganic materials and electrodes to a separator substrate and increase heat resistance and air permeability of the separator.

In particular, the copolymer of the present disclosure is sensitive to pressure, thereby the copolymer can improve pressure-sensitive adhesive properties at room temperature and under heating conditions (40°C to 70°C).

In addition, the copolymer of the present disclosure can reduce a defect rate and minimize dead space formation, which occurs during lamination fixation during battery assembly, and can improve ionic conductivity and air permeability in an electrolyte solution.

On the other hand, when an inorganic coating binder is coated (DCS) with the copolymer of the present disclosure, or when coated alone (SCS) for multi-purpose use, adhesion strength can be maximized, and battery performance and stability can be enhanced while battery defects are ultimately minimized.

## Claims

1. A copolymer, comprising:
a monomer unit comprising a heterocyclic structure with 2 to 6 carbon atoms and at least one oxygen atom,
wherein the monomer unit is present in an amount of 1% to 40% by weight, based on 100% by weight of the total weight of the copolymer.

2. The copolymer of Claim 1, further comprising an acrylonitrile-based monomer, an acrylate-based monomer unit, an acrylic acid-based monomer unit, a vinyl acetate-based monomer unit, and a styrene-based monomer unit.

3. The copolymer of Claim 2, further comprising, based on 100% by weight of the total weight of the copolymer, 3% to 15% by weight of the acrylonitrile-based monomer, 20% to 60% by weight of the acrylate-based monomer unit, 5% to 15% by weight of the acrylic acid-based monomer unit, 5% to 15% by weight of the vinyl acetate-based monomer unit, and 5% to 20% by weight of the styrene-based monomer unit.

4. The copolymer of Claim 2, wherein the acrylate-based monomer unit is formed by polymerizing one or more types selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate,
wherein the acrylic acid-based monomer unit is formed by polymerizing one or more types selected from the group consisting of acrylic acid and methacrylic acid, and
the acrylonitrile-based monomer is formed by polymerizing one or more types selected from the group consisting of acrylonitrile and methacrylonitrile.

5. The copolymer of Claim 1, wherein the heterocyclic structure with 2 to 6 carbon atoms and at least one oxygen atom comprises ethylene oxide, trimethylene oxide, furan, tetrahydrofuran, tetrahydropyran, pyran, dioxane, morpholine, or a combination thereof.

6. The copolymer of Claim 1, wherein the monomer unit containing the heterocyclic structure with 2 to 6 carbon atoms and an oxygen atom is formed by polymerizing tetrahydrofurfuryl acrylate, tetrahydrofurfuryl methacrylate, or a combination thereof.

7. The copolymer of Claim 2, wherein the acrylic acid-based monomer unit is combined with an alkali metal.

8. The copolymer of Claim 1, comprising a repeated monomer unit represented by Formula 1 below, 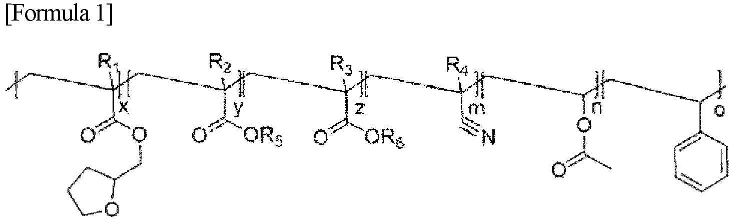 wherein, in Formula 1 above,
R₁ to R₄ are each independently hydrogen; linear or branched hydrocarbons having 1 to 4 carbon atoms; or a combination thereof,
R₅ is a linear or branched hydrocarbon having 1 to 20 carbon atoms,
R₆ is hydrogen, an alkali metal, or a combination thereof, and
x, y, z, m, n, and o may satisfy an equation of x+y+z+m+n+o=1.

9. The copolymer of Claim 1, wherein the copolymer is a random or a block copolymer.

10. The copolymer of Claim 1, wherein the degree of crosslinking of the copolymer is 80% or more.

11. A core-shell particle, comprising:
a core; and
a shell surrounding the core,
wherein the shell comprises the copolymer of any one of claims 1 to 10.

12. A slurry composition, comprising:
the copolymer of any one of claims 1 to 10; and
an inorganic particle.

13. A separator, comprising the slurry composition of Claim 12.

14. A secondary battery, comprising the separator of Claim 13.
